# EUROPÄISCHE PATENTSCHRIFT

(11) **EP 1 970 230 B1**
(45) Veröffentlichungstag und Bekanntmachung des Hinweises auf die Patenterteilung: **18.09.2013**
(21) Anmeldenummer: 08004550.3
(22) Anmeldetag: 12.03.2008
(51) Int. Cl.: B60H 1/00, B60H 1/32, F28F 17/00

(54) **Verdampferwanne, insbesondere für eine Kraftfahrzeug-Klimaanlage**
Vaporisation basin, in particular for the air conditioning system of a vehicle
Bac d'évaporation, en particulier pour la climatisation d'un véhicule automobile

(30) Priorität: 14.03.2007 DE 102007012957
(43) Veröffentlichungstag der Anmeldung: 17.09.2008
(73) Patentinhaber: Behr GmbH & Co. KG, 70469 Stuttgart (DE)
(72) Erfinder: Spörl, Franz, 85104 Wackerstein (DE); Satrapa, Alexander, 71069 Sindelfingen (DE); Berger, Michael, 71642 Ludwigsburg (DE)
(74) Vertreter: Grauel, Andreas

(56) Entgegenhaltungen:
- DE-A1- 19 654 776
- JP-A- 10 086 653
- JP-A- 11 192 834
- US-A1- 2005 126 216

## Beschreibung

Die Erfindung betrifft eine Verdampferwanne gemäß dem Oberbegriff des Anspruchs 1, eine solche wird durch die US 2005/0126216 A1 offenbart.

Bei Wasserkästen ist es bekannt, dass sie an das Gehäuse einer Klimaanlage, insbesondere an das den Verdampfer der Klimaanlage aufnehmende Gehäuse, angeschraubt ist. Hierbei treten jedoch häufig Probleme in Bezug auf die Dichtheit auf, so dass gelegentlich Wassertropfen seitlich austreten.

Aus der EP 1 426 215 A1 ist eine Wasserkastenanordnung, insbesondere in Verbindung mit einer Heizungs- oder Klimaanlage für ein Kraftfahrzeug bekannt, wobei der Wasserkasten, in ein Gehäuse integriert ausgebildet ist, um die zuvor genannten Dichtheitsprobleme zu beseitigen. Hierbei ist zumindest ein Teil des Wasserkastens einstückig mit einem Teil des Gehäuses ausgebildet. Bevorzugt ist hierbei eine im eingebauten Zustand vertikal verlaufende Teilung von Wasserkasten und Gehäuse vorgesehen, wobei die Teile mittels einer Schweiß- oder Klebeverbindung verbunden sind. Der Verdampfer ist im eingebauten Zustand oberhalb des Wasserkastens angeordnet.

Eine Klimaanlage mit einem in einem Luftführungsgehäuse angeordneten Verdampfer und einem Heizkörper ist aus der EP 1 512 564 A1 bekannt, wobei im Luftführungsgehäuse nach dem Verdampfer mindestens eine Rinne zur Ableitung von Kondenswasser vorgesehen ist. Diese Rinne ist an einer einstückig mit dem Luftführungsgehäuse ausgebildeten, vorstehenden Wand zwischen dem Verdampfer und dem Heizkörper auf der Seite des Verdampfers angeordnet.

Derartigere Ausgestaltungen lassen jedoch noch Wünsche offen.

Es ist Aufgabe der Erfindung, einen verbesserten Verdampfer mit Verdampferwanne zur Verfügung zu stellen.

Diese Aufgabe wird gelöst durch eine Verdampferwanne für einen Verdampfer mit den Merkmalen des Anspruchs 1. Vorteilhafte Ausgestaltungen sind Gegenstand der Unteransprüche.

Erfindungsgemäß ist eine Verdampferwanne gemäß Anspruch 1 vorgesehen, mit einem wannenartigen Bereich zum Sammeln und Abgeben von Kondenswasser und einem im untersten Bereich dieses wannenartigen Bereichs angeordneten Auslaufstutzen; wobei die Verdampferwanne mindestens ein hochgeklapptes Seitenteil aufweist. Insbesondere bevorzugt sind das Seitenteil und die Verdampferwanne einstückig ausgebildet, wobei das Seitenteil im Rahmen der Herstellung und/oder Montage hochgeklappt wird, so dass es in Anlage an eine Schmalseite eines in der Verdampferwanne angeordneten Verdampfers gelangt. Insbesondere bevorzugt sind zwei derartige Seitenteile an den Enden der Schmalseiten der Verdampferwanne ausgebildet. Die Länge der Seitenteile ist bevorzugt derart bemessen, dass sie im zusammengebauten Zustand etwas über den Verdampfer hinausragen, so dass der Verdampfer nicht nur seitlich sondern auch im oberen Bereich zumindest teilweise umgriffen wird, wodurch sich eine einfachere Fixierung des Seitenteils im Falle einer sehr elastischen Ausgestaltung desselben ermöglicht. Durch ein vollständiges Umgreifen lässt sich zudem eine Rundumabdichtung des Verdampfers auf sehr einfache Weise ermöglichen, Zusätzliche Dichtelemente sind nicht erforderlich.

Insbesondere bevorzugt ist eine Rastfunktion vorgesehen, d.h. am Seitenteil oder am Verdampfer ist ein Vorsprung und am anderen Bauteil eine entsprechende Öffnung für den Vorsprung vorgesehen, so dass ein einfaches Hochklappen des Seitenteils möglich ist.

Die Verdampferwanne ist vorzugsweise aus Kunststoff oder einem Metallblech gebildet. Eine Kunststoffwanne kann vorzugsweise im Spritzgussverfahren oder Blasverfahren ausgebildet werden. Eine Metallwanne ist vorzugsweise als Stanz-Biegeteil ausgebildet. Insbesondere im Falle einer Ausgestaltung als Kunststoffteil, besonders bevorzugt als geschlossenzellig geschäumtes Kunststoffteil mit ausreichender Elastizität, kann die Verdampferwanne Toleranzschwankungen sehr gut aufnehmen und ausgleichen, so dass im eingebauten Zustand des Verdampfers in einem Gehäuse unter Zwischenlage der Verdampferwanne kein Vorbeiströmen von Luft möglich ist. Zum verbesserten Toleranzausgleich weist das Seitenteil vorzugsweise zumindest teilweise wellenartig ausgebildete Bereiche auf.

Im Falle der Ausgestaltung als Kunststoffteil weist die Verdampferwanne zudem eine isolierende Funktion auf, so dass sich kein Kondenswasser an der Gehäuseaußenwand bildet.

Der Zulaufbereich der Verdampferwanne zum Ablaufstutzen weist vorzugsweise einen Winkel zur Horizontalen von größer 0° und kleiner 35°, insbesondere 15° +/- 5° auf. Dies stellt ein sicheres Ablaufen des sich im unteren Bereich sammelnden Kondensats sicher. Der Ablaufstutzen ragt vorzugsweise bis über das die Verdampferwanne umgebende Gehäuse hinaus.

Die Verdampferwanne weist bevorzugt mindestens einen flügelartig ausgebildeten Bereich auf, welcher benachbart dem Seitenteil angeordnet ist. Im eingebauten Zustand ist dieser Bereich luftanströmseitig oder luftabströmseitig angeordnet.

Vorzugsweise weist die Verdampferwanne mindestens eine untere Absperrrippe auf, welche durch den luftanströmseitig angeordneten, flügelartig ausgebildeten Bereich gebildet ist. Diese Absperrrippe dient dazu, ein Spritzen des Verdampfers zu verhindern. Vorteilhafterweise ist eine solche untere Absperrrippe, gebildet aus einem flügelartigen Bereich alternativ oder zusätzlich auch luftabströmseitig an der Verdampferwanne vorgesehen um ein Spritzen des Kondenswassers und damit den Eintrag von Feuchtigkeit in den geförderten Luftstrom weiter zu vermindern. Eine Absperrrippe kann auch luftanströmseitig und/oder luftabströmseitig, im zusammengebauten Zustand oben am Verdampfer angeordnet sein. Besonders bevorzugt ist diese obere Absperrrippe im oberen Bereich an dem Seitenteil ausgebildet oder angebracht.

Der flügelartige Bereich, der luftabströmseitig angeordnet ist, untergreift bevorzugt einen Bereich des Gehäuses, um ein Rückströmen von Kondenswasser in die Verdampferwanne, das mit dem Luftstrom mitgerissen wurde, zu ermöglichen und zudem ein Ausströmen von Kondenswasser in den Zwischenbereich von Gehäuse und Verdampferwanne zu verhindern.

Im Folgenden wird die Erfindung anhand von einem Ausführungsbeispiel unter Bezugnahme auf die Zeichnung im Einzelnen erläutert. In der Zeichnung zeigen:
- Fig. 1: eine schematische, perspektivische Ansicht einer Verdampferwanne ohne Darstellung des Verdampfers gemäß dem ersten Ausführungsbeispiel,
- Fig. 2: einen Schnitt durch die Verdampferwanne von Fig. 1 mit Verdampfer,
- Fig. 3: eine Draufsicht auf eine nicht gebogene Verdampferwanne aus Blech gemäß einem zweiten nicht erfindungsgemäßen Beispiel, und
- Fig. 4: eine geschnittene Detailansicht des Luftanströmbereichs der Verdampferwanne von Fig. 3 mit eingesetztem Verdampfer.

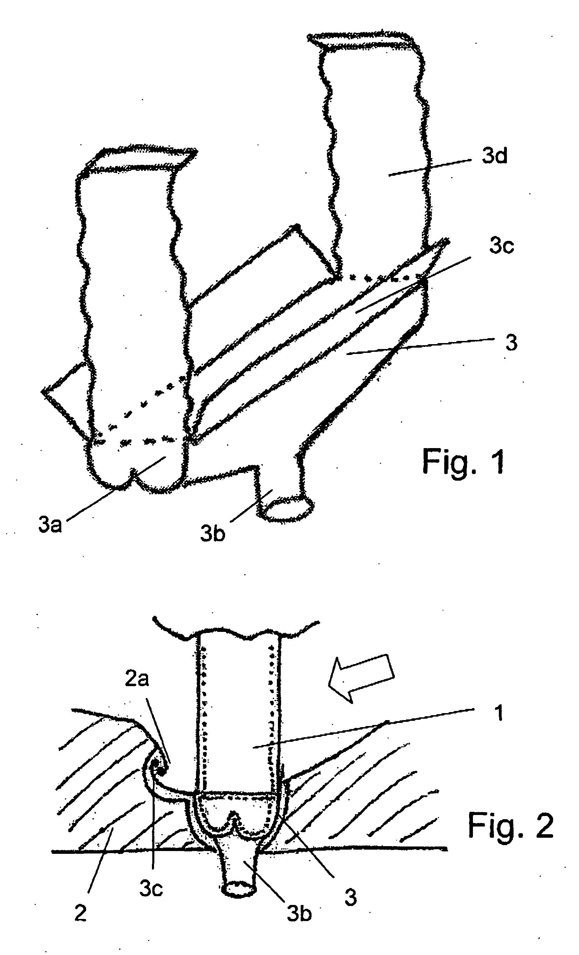

Eine Kraftfahrzeug-Klimaanlage weist einen im Wesentlichen aufrecht im Fahrzeug angeordneten Verdampfer 1 auf, der in Fig. 2 gepunktet dargestellt ist. Der Verdampfer 1 ist in einem mehrteiligen Kunststoffgehäuse 2 aufgenommen, weiches den Luftstrom auf an sich bekannte Weise von einem Gebläse kommend zum Verdampfer 1 und anschließend zu einem Heizkörper oder einem Bypass um den Heizkörper in einen Mischraum führt, von wo aus die temperierte Luft über Luftkanäle dem Fahrzeuginnenraum zugeführt wird.

Auf Grund der in der Luft enthaltenen Luftfeuchtigkeit, kondensiert die in der Luft enthaltene Luftfeuchtigkeit teilweise an den relativ kalten Oberflächen des Verdampfers 1. Für das Sammeln und Abführen des am Verdampfer 1 kondensierenden Kondenswasser ist zwischen dem Kunststoffgehäuse 2 und dem unteren und seitlichen Bereich des Verdampfers 1 eine Verdampferwanne 3 angeordnet, in welche das Kondenswasser in Folge der Schwerkraft ggf. auch in Zusammenwirken mit der vorbeiströmenden Luft (Strömungsrichtung der Luft ist durch den Pfeil in Fig. 2 angedeutet) gelangt.

Bei der Verdampferwanne 3 gemäß dem ersten Ausführungsbeispiel handelt es sich um ein Kunststoff-Blasformteil mit relativ geringer Wandstärke, d.h. die Verdampferwanne 3 ist zumindest bereichsweise elastisch verformbar ausgebildet und passt sich somit problemlos an Anlageflächen an, um Toleranzen auszugleichen. Als Kunststoff kann gegebenenfalls auch ein geschlossenzelliger, geschäumter Kunststoff verwendet werden. Die Verdampferwanne 3 weist einen wannenförmigen Bereich 3a mit einem unterhalb des Verdampfers 1 angeordneten Ablaufstutzen 3b, luftanström- und luftabströmseftig angeordnete, flügelartig ausgebildete Bereiche 3c und an den Verdampferschmalseiten seitlich außen anbringbare Seitenteile 3d auf. Alternativ können auch mehrere, insbesondere zwei oder drei Ablaufstutzen 3b vorgesehen sein, welche bevorzugt symmetrisch längs der Verdampferwanne verteilt sind.

Der wannenförmige Bereich 3a der Verdampferwanne 3 ist im in ein Fahrzeug eingebauten Zustand im Wesentlichen unterhalb des Verdampfers 1 angeordnet, wobei die Ausrichtung üblicherweise im Wesentlichen horizontal im Fahrzeug ist. Der wannenförmige Bereich 3a weist in seinem unteren Bodenbereich einen Winkel von vorliegend 15° zur Horizontalen auf, wobei er an seiner tiefsten Stelle in einen Auslaufstutzen 3b einmündet, über welchen das Kondenswasser nach außen abgeführt werden kann. Hierfür ist der Auslaufstutzen 3b entsprechend lang ausgebildet, so dass er über das die Verdampferwanne 3 umgebende Kunststoffgehäuse 2 hinausragt und von außen her ein Schlauch zur weiteren Ableitung des Kondenswassers am Ende des Auslaufstutzens 3b angebracht ist. Alternativ kann der Auslaufstutzen auch entsprechend lang und ggf. elastisch verformbar ausgebildet sein.

Der luftabströmseitig angeordnete, flügelartig ausgebildete Bereich 3c ist vorliegend etwas länger als der luftanströmseitig angeordnete, flügelartig ausgebildete Bereich 3c ausgebildet und hintergreift einen nach unten stehenden, in Luftströmungsrichtung gekrümmt ausgebildeten, in horizontaler Richtung verlaufenden Vorsprung 2a des Kunststoffgehäuses 2, so dass kein Kondenswasser zwischen das Kunststoffgehäuse 2 und die Verdampferwanne 3 gelangen kann. Zudem tropft Kondenswasser, das bei großen Luftströmungsgeschwindigkeiten durch den Verdampfer 1 über eine kurze Strecke mitgerissen werden kann, wieder in die Verdampferwanne 3.

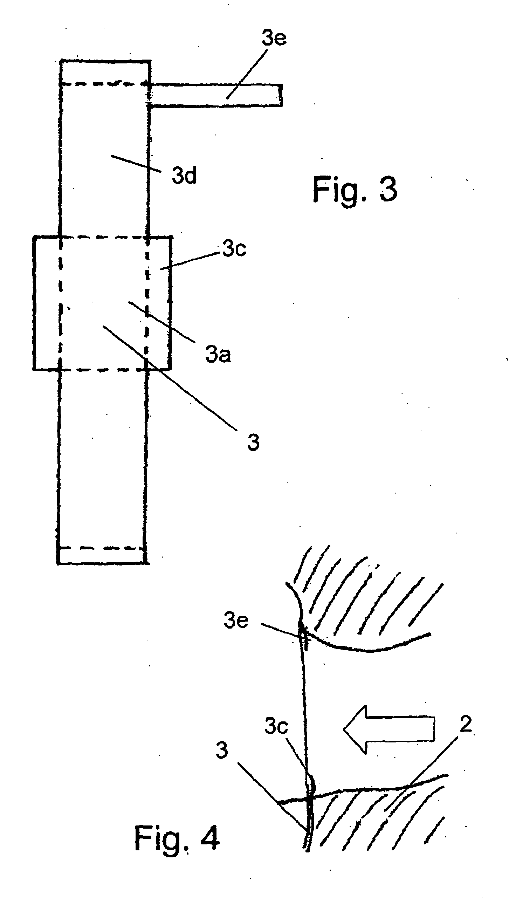

In Folge der zuvor beschriebenen Ausgestaltung der Verdampferwanne 3 in Verbindung mit der entsprechenden Ausgestaltung des Kunststoffgehäuses 2 kann ein sicheres Auffangen und Abführen des Kondenswassers erreicht werden. Um ein Spritzen des Verdampfers 1 zu verhindern, ist vorliegend an der Kunststoffwanne unten eine Absperrrippe vorgesehen, welche durch den luftanströmseitig angeordneten, flügelartig ausgebildeten Bereich 3c gebildet wird. Die Absperrrippe ist bis zum Anfang der Wellrippen des Verdampfers 1, also bis zum Wärmeüberkragungsbereich hochgezogen. Eine entsprechende Absperrrippe kann auch am Verdampfer oben angeordnet sein, wie in Fig. 4 dargestellt und unter Bezugnahme auf das zweite Ausführungsbeispiel beschrieben ist.

Die Seitenteile 3d sind erfindungsgemäß wellenförmig ausgebildet und seitlich hochgeklappt, wobei sie den Verdampfer 1 zwischen sich aufnehmen. Das äußerste Ende der Seitenteile 3d ist üben über den Verdampfer 1 geklappt, um die Seitenteile 3d oben zu fixieren. Die Funktion der Seitenteile 3d ist im Wesentlichen die Luftabdichtung, d.h. das Verhindern eines Vorbeiströmens von Luft am Verdampfer 1. Die Wellen der Seitenteile 3d dienen insbesondere dem Toleranzausgleich und verhindern ein Klappern während der Fahrt, sie verhindern jedoch auch eine Kondenswasserbildung an der Außenwand des Kunststoffgehäuses in Folge ihrer Isolierwirkung. Die Seitenteile 3d umgreifen den äußeren Bereich des Verdampfers 1, wobei im Falle des Fehlens von äußeren Seitenblechen des Verdampfers die äußerste Lage Wellrippen umgriffen wird.

Eine Montage derartiger Seitenteile (ggf. in Verbindung mit der gesamten Verdampferwanne) kann - bei entsprechender Ausgestaltung - direkt in der Verdampferfertigung erfolgen, so dass der Verdampfer durch die Seitenteile (und ggf. die Verdampferwanne) geschützt wird. Im Rahmen der Montage kann - bei getrennter Ausgestaltung von Seitenteilen und Verdampferwanne - eine Anbringung der Seitenteile an der Verdampferwanne erfolgen, bspw. mittels Kleben oder Kunststoffschweißens.

Gemäß dem zweiten, in Figuren 3 und 4 dargestellten Beispiel ist eine Verdampferwanne 3 in Gestalt eines Blechbiegeteils vorgesehen, wobei in Fig. 3 die gestanzte, noch nicht gebogene Form dargestellt ist, und die Biegelinien durch gestrichelte Linien dargestellt sind. Für die Ausbildung des wannenförmigen Bereichs 3a wird der entsprechende Bereich des Blechs im Rahmen des Biegens etwas tiefgezogen und eine Auslassöffnung im untersten Bereich ausgebildet. Entsprechend dem ersten Ausführungsbeispiel weist die Verdampferwanne 3 des zweiten Ausführungsbeispiels besagten wannenförmigen Bereich 3a, einen Auslaufstutzen (nicht dargestellt), luftanström- und luftabströmseitig angeordnete, flügelartig ausgebildete Bereiche 3c und an den Verdampferschmalseiten seitlich außen anbringbare Seitenteile 3d auf. Die Seitenteile 3d sind wiederum länger als für die Höhe des Verdampfers erforderlich ausgebildet, und werden an ihren oberen Enden umgebogen. Ferner ist, wie bereits zuvor erwähnt, eine obere Absperrrippe 3e auf der Luftanströmseite vorgesehen, die an einem Seitenteil 3d ausgebildet ist (siehe Fig. 3). Die obere Absperrrippe 3e ist, wie auch die untere Absperrrippe der Verdampferwanne 3 zur Verhinderung eines Spritzens des Verdampfers luftanströmseitig angeordnet und bis zum Anfang der Wellrippen des Verdampfers herunter bzw. hochgezogen. Luftabströmseitig ist der flügelartig ausgebildete Bereich 3c entsprechend dem ersten Ausführungsbeispiel ausgebildet, d.h. ein Bereich des Kunststoffgehäuses 2 wird untergriffen, um ein Austreten von Kondenswasser zu verhindern.

Durch das Vorsehen der Verdampferwanne 3 mit hochgezogenen Seitenteilen 3d und den luftanström- und luftabströmseftig angeordneten, flügelartig ausgebildeten Bereichen 3c kann auf eine zusätzliche Abdichtung des Verdampfers gegenüber dem Kunststoffgehäuse verzichtet werden, so dass sich insgesamt der Bauraumbedarf gegenüber herkömmlichen Anordnungen mit eingelegten Dichtelementen nicht erhöht, die Montage aber vereinfacht.

## Patentansprüche

1. Verdampferwanne mit einem wannenartigen Bereich (3a) zum Sammeln und Abgeben von Kondenswasser und einem im untersten Bereich dieses wannenartigen Bereichs (3a) angeordneten Auslaufstutzen (3b), **dadurch gekennzeichnet, dass** die Verdampferwanne (3) mindestens ein hochgeklapptes Seitenteil (3d) aufweist und das Seitenteil (3d) zumindest teilweise wellenartig ausgebildete Bereiche aufweist.

2. Verdampferwanne nach Anspruch 1, **dadurch gekennzeichnet, dass** die Verdampferwanne (3) aus Kunststoff oder einem Metallblech gebildet ist.

3. Verdampferwanne nach einem der vorhergehenden Ansprüche, **dadurch gekennzeichnet, dass** das Seitenteil (3d) an seinem oberen Ende umklappbar ist.

4. Verdampferwanne nach einem der vorhergehenden Ansprüche, **dadurch gekennzeichnet, dass** die Verdampferwanne (3) mindestens einen flügelartig ausgebildeten Bereich (3c) aufweist, welcher benachbart dem Seitenteil (3d) angeordnet ist.

5. Verdampferwanne nach einem der vorhergehenden Ansprüche, **dadurch gekennzeichnet, dass** der Zulaufbereich der Verdampferwanne (3) zum Ablaufstutzen (3b) einen Winkel zur Horizontalen von 15° +/- 5° einnimmt.

6. Verdampferwanne nach einem der vorhergehenden Ansprüche, **dadurch gekennzeichnet, dass** die Verdampferwanne (3) mindestens eine untere Absperrrippe aufweist, welche durch den luftanströmseitig angeordneten, flügelartig ausgebildeten Bereich (3c) gebildet ist.

7. Verdampferwanne nach einem der vorhergehenden Ansprüche, **dadurch gekennzeichnet, dass** die Verdampferwanne (3) mindestens eine obere Absperrrippe (3e) aufweist, die im oberen Bereich an dem Seitenteil (3d) ausgebildet oder angebracht ist.

8. Anordnung, aufweisend einen Verdampfer (1) und eine Verdampferwanne (3) gemäß einem der vorhergehenden Ansprüche, wobei der Verdampfer (1) oberhalb des wannenartigen Bereichs (3a) der Verdampferwanne (3) und zwischen zwei Seitenteilen (3d) angeordnet ist.

9. Anordnung nach Anspruch 8, **dadurch gekennzeichnet, dass** Seitenteile (3d) den Verdampfer (1) umgreifen, insbesondere zumindest teilweise übergreifen.

10. Unordnung einer Verdampferwanne in einem Gehäuse, wobei die Anordnung nach einem der Ansprüche 8 oder 9 ausgebildet ist, **dadurch gekennzeichnet, dass** die Verdampferwanne (3) samt Verdampfer (1) in einem Gehäuse (2) angeordnet sind, wobei die Verdampferwanne (3) einen ausströmseitigen Untergriff zu der die Verdampferwanne (3) zumindest bereichsweise umgebenden Wand des Gehäuses (2) aufweist.

## Claims

1. Evaporator basin, comprising a basin-like region (3a) for collecting and delivering condensation water and a discharge pipe connection (3b) arranged in the lowermost region of this basin-like region (3a), **characterised in that** the evaporator basin (3) has at least one side part (3d) folded upwards and the side part (3d) has regions formed in an undulating manner, at least in part.

2. Evaporator basin according to claim 1, **characterised in that** the evaporator basin (3) is formed from plastic or a metal sheet.

3. Evaporator basin according to one of the preceding claims, **characterised in that** the side part (3d) can be folded over at its upper end.

4. Evaporator basin according to one of the preceding claims, **characterised in that** the evaporator basin (3) has at least one wing-like region (3c), which is arranged adjacent to the side part (3d).

5. Evaporator basin according to one of the preceding claims, **characterised in that** the inlet region of the evaporator basin (3) to the discharge pipe connection (3b) adopts an angle of 15°+/- 5° to the horizontal.

6. Evaporator basin according to one of the preceding claims, **characterised in that** the evaporator basin (3) has at least one lower stop rib, which is formed by the wing-like region (3c) arranged on the air inflow side.

7. Evaporator basin according to one of the preceding claims, **characterised in that** the evaporator basin (3) has at least one upper stop rib (3e), which is formed or attached on the side part (3d) in the upper region.

8. Arrangement comprising an evaporator (1) and an evaporator basin (3) according to one of the preceding claims, wherein the evaporator (1) is arranged above the basin-like region (3a) of the evaporator basin (3) and between two side parts (3d).

9. Arrangement according to claim 8, **characterised in that** side parts (3d) encompass the evaporator (1), and in particular overlap the evaporator at least in part.

10. Arrangement of an evaporator basin in a housing, wherein the arrangement is formed according to one of claims 8 or 9, **characterised in that** the evaporator basin (3) including the evaporator (1) is arranged in a housing (2), wherein the evaporator basin (3) has an undercut, on the outflow side, relative to the wall of the housing (2) surrounding the evaporator basin (3) at least in regions.

## Revendications

1. Bac d'évaporation comprenant une zone (3a) en forme de bac servant à collecter et à fournir de l'eau de condensation, et une tubulure de sortie (3b) disposée dans la partie la plus basse de cette zone (3a) en forme de bac, **caractérisé en ce que** le bac d'évaporation (3) présente au moins une partie latérale (3d) rabattue vers le haut, et la partie latérale (3d) présente des zones configurées au moins partiellement de façon ondulée.

2. Bac d'évaporation selon la revendication 1, **caractérisé en ce que** le bac d'évaporation (3) est formé en étant constitué de matière plastique ou d'une tôle métallique.

3. Bac d'évaporation selon l'une ou l'autre des revendications précédentes, **caractérisé en ce que** la partie latérale (3d) est rabattable au niveau de son extrémité supérieure.

4. Bac d'évaporation selon l'une quelconque des revendications précédentes, **caractérisé en ce que** le bac d'évaporation (3) présente au moins une zone (3c) configurée en forme d'ailette, zone qui est disposée en étant adjacente à la partie latérale (3d).

5. Bac d'évaporation selon l'une quelconque des revendications précédentes, **caractérisé en ce que** la zone d'alimentation du bac d'évaporation (3) allant jusqu'à la tubulure de sortie (3b) forme un angle de 15°+/-5° par rapport à l'horizontale.

6. Bac d'évaporation selon l'une quelconque des revendications précédentes, **caractérisé en ce que** le bac d'évaporation (3) présente au moins une ailette de retenue inférieure qui est formée par la zone (3c) configurée en forme d'ailette et disposée du côté de l'arrivée d'air.

7. Bac d'évaporation selon l'une quelconque des revendications précédentes, **caractérisé en ce que** le bac d'évaporation (3) présente au moins une ailette de retenue supérieure (3e) qui, dans la zone supérieure, est configurée ou fixée sur la partie latérale (3d).

8. Agencement présentant un évaporateur (1) et un bac d'évaporation (3) selon l'une quelconque des revendications précédentes, où l'évaporateur (1) est disposé au-dessus de la zone (3a) - en forme de bac - du bac d'évaporation (3) et entre deux parties latérales (3d).

9. Agencement selon la revendication 8, **caractérisé en ce que** des parties latérales (3d) débordent sur l'évaporateur (1) par les côtés, en particulier débordent au moins partiellement par le haut.

10. Agencement d'un bac d'évaporation dans un carter, où l'agencement est configuré selon l'une des revendications 8 ou 9, **caractérisé en ce que** le bac d'évaporation (3) ainsi que l'évaporateur (1) sont disposés dans un carter (2), où le bac d'évaporation (3) présente une prise par le dessous, située côté sortie d'écoulement, allant jusqu'à la paroi du carter (2) entourant au moins partiellement le bac d'évaporation (3).
